# EUROPEAN PATENT SPECIFICATION

(11) **EP 1 959 649 B1**
(45) Date of publication and mention of the grant of the patent: **25.08.2010**
(21) Application number: 07102420.2
(22) Date of filing: 14.02.2007
(51) Int. Cl.: H04M 1/72, H04M 1/04

(54) **Method and apparatus for preventing action responsive to accidental keystrokes**
Verfahren und Vorrichtung zur Verhinderung von Aktionen infolge unbeabsichtigter Tastenanschläge
Procédé et appareil pour prévenir une action suite à une frappe accidentelle au clavier

(43) Date of publication of application: 20.08.2008
(73) Proprietor: RESEARCH IN MOTION LIMITED, Waterloo, Ontario N2L 3W8 (CA)
(72) Inventor: Martin, Daryl Joseph, Paradise Ontario A1L 2Y6 (CA); Sadek, Ahmed, Oakville Ontario L6M 3H3 (CA); Hassan, Ahmed E., Waterloo Ontario N2J 4T3 (CA)
(74) Representative: MERH-IP Matias Erny Reichl Hoffmann

(56) References cited:
- EP-A- 0 453 089
- EP-A- 0 865 188
- EP-A- 1 411 709
- US-B1- 6 236 868

## Description

The following is directed in general to input devices on electronic devices, and more particularly to a method and apparatus in a mobile communication device for preventing action responsive to accidental activation of such input devices.

It is well known in electronic devices to provide a "locked" operating mode such as a "sleep" mode for conserving power, extending display lifetime, etc., when the device is not in active use. For example, it is known for mobile communication devices, such as Personal Digital Assistants (PDAs), cellular phones and smart phones, to revert to a "locked" mode wherein the keyboard becomes locked and the display is turned off, in response to the device being placed in a carrying holder such as a holster. Likewise, it is known for a laptop computer to revert to a "locked" mode when the lid of the laptop is closed, and for a desktop computer to enter "locked" mode in response to user activation of a "lock" key.

For mobile communication devices, it is known for the holster to incorporate means for detecting the presence of the device in the holster. For example, some holsters include a mechanical means in the holster which is engaged by insertion or removal of the device, thereby triggering a switch in the device. Another prior art holster is set forth in US patent application publication no. US2006/0116183, wherein a magnet is positioned to interact with and trigger a proximity switch (e.g. Hall effect) in the device to thereby sense whether or not the device is in the holster. Once the device has been cradled in its holster, software within the device may be executed to disable input devices, such as keyboards, trackballs, etc. EP1411709 discloses the automatic activation of one or more such security measures in an electronic device such as closing any open data items or removing decrypted information from memory in response to storing the device in a holder, where the holder incorporates a proximity detector that outputs a signal to a processor upon holstering the device.
It is known in the art to disable input devices in response to an electronic device entering locked mode as in EP 0453089.

Although it is known in the art to disable input devices in response to an electronic device entering "locked" mode, for example, as a result of having been cradled in a carrying holster, it is not uncommon for users to accidentally actuate the input devices before the electronic device has completely entered its "locked" mode. For example, it is not uncommon for a user to "mash" the keyboard of a mobile communication device at it slides into its holster with the result that accidental phone calls or e-mails have been made, unexpected options windows have been opened, etc., which only come to the user's attention upon removing the device from its holster. Likewise, it is
not uncommon for a user to "mash" the keyboard of a desktop computer while hitting the "lock" key, or the keyboard of a laptop computer while closing its lid. Such unexpected device actions cause confusion in the minds of users and may raise doubt that the device is working properly. Although it is also possible to accidentally actuate the input devices during the process of returning an electronic device to its "active" state, such accidental actuation does not typically present a problem. For example, when a mobile communication is removed from its holster the un-holstering operation is usually much smoother than the holstering operation and therefore less prone to accidental keystrokes. Also, it takes time for an electronic device to initialize its inputs and the user is presented with the display screen so that the user almost always immediately notices the accidental actuation and can stop execution of the resulting action. Also, as discussed above, a common option for electronic devices such as computers and mobile communication devices is to enter a "lock" mode when holstered, so that before the device is returned to its active state a password prompt screen is displayed such that accidental input of data is prevented until the device is unlocked by the user.

### General

According to a main aspect of this specification, there is provided a method of processing a command in the event of accidental actuation of an input device while entering a locked operating mode of an electronic device that executes a command in response to actuation of said input device, the method comprising: detecting an input signal resulting from actuation of said input device and in response initiating execution of said command; buffering said command for a predefined period of time; and detecting an action within said predefined period of time, for causing said electronic device to enter said locked operating mode, and in response discarding said command or deferring execution of said command upon reverting from said locked operating mode.

Additional aspects and advantages will be apparent to a person of ordinary skill in the art, residing in the details of construction and operation as more fully hereinafter described and claimed, reference being had to the accompanying drawings.

### Brief Description of the Drawings

A detailed description of the preferred embodiment is set forth in detail below, with reference to the following drawings, in which:

Figure 1 is side view, partially in cross section, showing a mobile communication device cradled within a holster, according to the prior art;

Figure 2 is a plan view of a mobile communication device, according to the preferred embodiment;

Figure 3 is a block diagram showing internal functional components of the mobile communication device of Figure 2; and

Figure 4 is a flow chart showing a method of reverting commands resulting from accidental activation of an input device of the mobile communication device in Figures 2 and 3, when cradling or un-cradling the device into/from the holster shown in Figure 1.

### Description of Preferred Embodiments

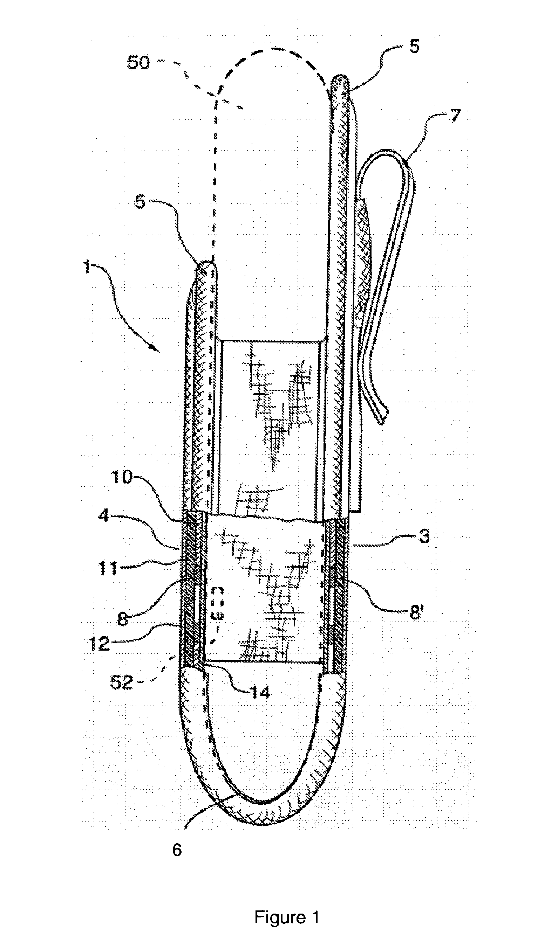

Figure 1 show a typical belt-mountable holster 1 as set forth in US2006/0116183, the contents of which are incorporated herein by reference. The holster 1 has a pocket area 2 defined by an inner panel 3, an outer panel 4, side walls 5, and a floor 6. Extending from the back of the inner panel is a belt clip 7.

A mobile communication device 50 includes a proximity switch 52 located near a front or rear surface thereof. In the illustrated example, the switch 52 is located near the rear surface of the device when the device is positioned in holster 1 with its rear surface facing out and its display facing in (i.e. towards the inner panel of the holster 1). Generally, it is preferable to locate the proximity switch 52 near a front or rear surface of the device, rather than on its front-to-back centerline, to minimize the magnet strength (flux) required to trigger the switch.

Preferably, the proximity switch 52 is used to detect presence of the mobile communication device 50 within the holster 1, in response to which user input devices of the device 50 (such as keyboards, trackballs, etc.) are disabled to prevent accidental activation.

As can be seen readily from the drawings, when the device is positioned in its "normal" manner in the holster 1, the proximity switch 52 aligns generally with, and is located close to, the magnet 8 in the inner panel 3.

An additional magnet 8' is provided corresponding to the location of the proximity switch 52 for each possible orientation (i.e. installed in the outer panel 4 of the holster 1). A layer of foam 11 may be outside the stiffening material and magnets, and the assembly is captured between inner and outer finished layers 12 and 14. Sewing or other means may be used around the pocket so that the magnet cannot escape, or the magnet may be bonded to the foam layer 11. Preferably, the proximity switch 52 is on an axis of lateral symmetry so that the magnets 8 and 8' can be centered on their respective panels.

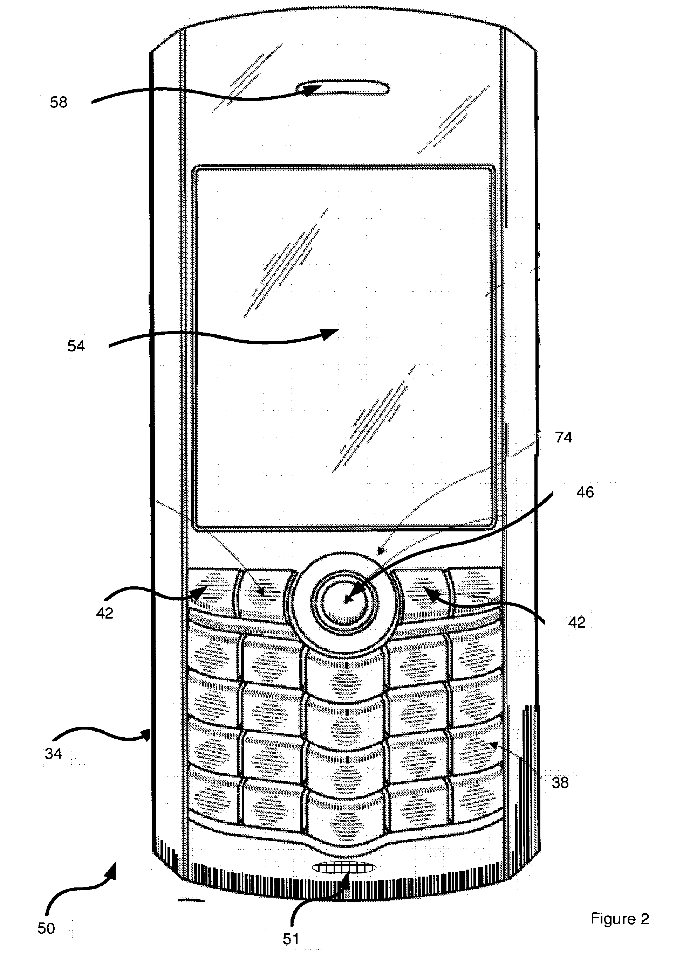

Figure 2 is a front view of an exemplary mobile communication device 50 that, in the illustrated present embodiment, includes the functionality of a wireless telephone, a wireless email paging device and a digital camera.

The device 50 includes a housing 34 that frames a plurality of input devices in the form of a keyboard 38, a set of soft keys 42, a trackball 46 and a microphone 51. Housing 34 also frames a plurality of output devices in the form of a display 54 and a speaker 58.

Accordingly, a user of device 50 can interact with the input devices and output devices to send and receive emails, conduct voice telephone calls, manage appointments and contacts, browse the Internet, and perform such other functions as can be found on a known or not-as-yet conceived mobile communication device such as device 50.

It is to be understood that device 50 is simplified for purposes of explanation, and that in other embodiments device 50 can include additional and/or different functions and/or applications, and include alternative input and output devices accordingly. Such other functionality can include music playing, audio recording and video playing. Examples of alternative input/output devices are a Universal Serial Bus ("USB") port, a headset jack to connect a handsfree headset to device 50, and a Bluetooth™ (or equivalent technology) transceiver. Likewise, it will be understood from the teachings herein that certain functions included in device 50 can be omitted.

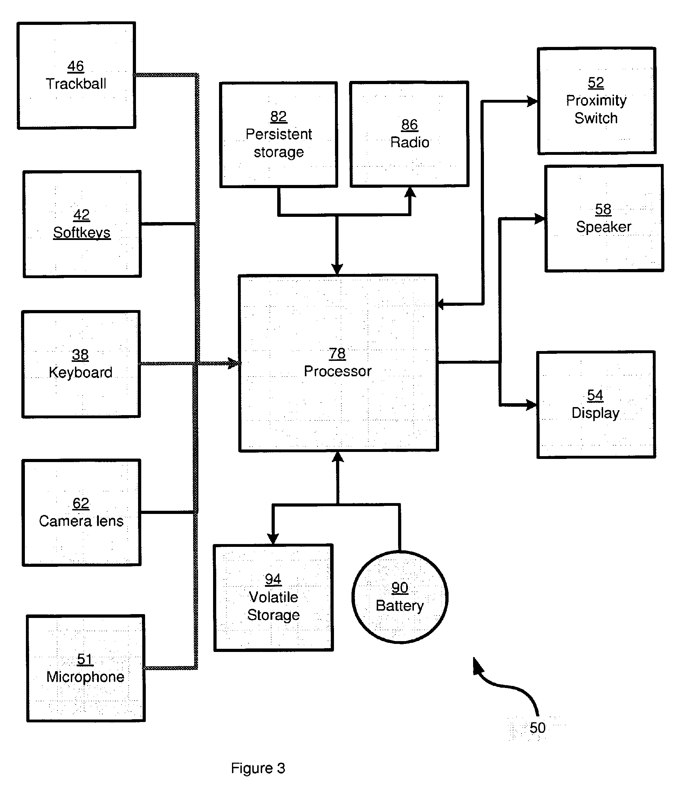

Referring now to Figure 3, a block diagram representing certain internal components of device 50 is shown. In the present embodiment, the mobile communication device 50 is a two-way RF communication device having voice and data communication capabilities. The mobile communication device 50 also includes internet communication capabilities. Device 50 thus includes a processor 78 which interconnects input devices of device 50 (i.e. trackball 46, soft keys 42, keyboard 38, camera light-sensitive transducer 62, microphone 51 and proximity switch 52) and output devices of device 50 (i.e. speaker 58 and display 54). Processor 78 is also connected to a storage element such as a persistent store 82 for storing operating system software and various software applications used by the microprocessor, and to a volatile storage 94 such as RAM. Persistent store 82 can be implemented using flash memory or the like, and/or can include other programmable read only memory (PROM) technology and/or can include read-only memory (ROM) technology and/or can include a removable "smart card" and/or can be comprised of combinations of the foregoing. Device 50 also includes a wireless radio 86 disposed within housing 34 that connects wirelessly to one of a network of base stations to provide the wireless email, telephony and Web-browsing functionality of device 50 via a data-only network such as Mobitex or DataTAC, or a complex voice and data network such as a GSM/GPRS, CDMA, EDGE, UMTS or CDMA2000 network.

Those skilled in the art will appreciate that the operating system, software applications, or parts thereof, may be temporarily loaded into volatile storage 94. It is contemplated that received communication signals may also be stored to volatile storage 94.

Device 50 also includes a battery 90 which is typically rechargeable and provides power to the components of device 50. In a present, purely exemplary embodiment, battery 66 is a lithium battery having an operating voltage of between about 3.0 Volts minimum to about 42 Volts maximum. In Figure 2, for simplicity battery 90 is only shown connected to processor 78, but it will be understood that battery 90 is connected to any component (e.g. the CCD associated light-sensitive transducer 62, radio 88, display 54 and volatile storage 94) within device 30 that needs power to operate.

As discussed above, proximity switch 52 provides a signal to the processor 78 upon detection of magnetic flux from either of magnets 8 or 8', in response to which the processor 78 disables input devices, such as keyboard 38, soft keys 42 and trackball 46.

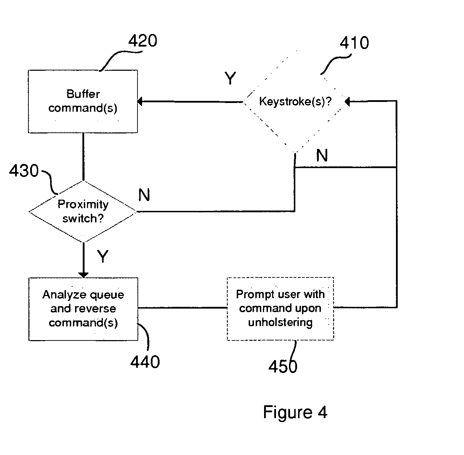

Referring now to Figure 4, a method of controlling input devices in mobile communication device 50 for reverting inadvertent commands, implemented as an input/output software routine within persistent store 82, is represented in a flowchart and indicated generally at 400. To assist in understanding method 400, method 400 will be explained in terms of its performance using device 50 in the context of keyboard 38. However, it is to be understood that this discussion is not be construed in a limiting sense, and that method 400 can be performed on devices other than mobile communication device 50 (e.g. desktop or laptop computers), in the context of soft keys 42, trackball 46, and any combination of the foregoing. Also, it will be understood that method 400 can be varied.

Beginning at step 410, the processor 78 detects if there has been a keystroke on keyboard 38. If not, the processor 78 continues to scan the keyboard for subsequent keystrokes. If any keystroke is detected, the keystroke(s) is/are transmitted to the operating system within persistent store 82, for normal execution of an associated command (not shown), but the OS also buffers the command(s) in a queue for a predefined length of time (step 420). A length of time in the range of 0.25 seconds to 0.5 seconds is believed to represent the time necessary for an average user to cradle his/her device 50 into the holster 1. However, it will be appreciated that this time period may be greater or less than the contemplated range of 0.25 seconds to 0.5 seconds, depending on specific user agility. For example, a disabled user may require a significantly longer buffering time period.

If, at the end of this predefined length of time, the processor 78 detects activation of proximity switch 52 (step 430), then all input devices are locked, the keystroke(s) is/are deemed to be accidental, the OS scans the command history in the queue and retracts or reverts the commands associated with those keystrokes (step 440). This has the result of either discarding the commands or, as an alternative the queued keystrokes can be saved for later deliberate execution by the user (step 450). In either case, the operating system does not act on "accidental" keystrokes and although the device 50 briefly enters an unexpected operating condition (e.g. to place random phone calls or send random e-mail messages, or present unexpected option windows to the user, etc.), the operating system quickly reverses the action and effectively 'backs out' of the unexpected operating condition. In the embodiment wherein keystroke commands are saved for later execution upon un-cradling the device 50, it is contemplated that the user may be presented with a list of un-executed commands and prompted (step 450) to execute/ignore the command(s).

From the user's perspective, the command buffering discussed above results in the mobile communication device 50 remaining in the same operating state when removed from the holster 1 as it was when the user cradled the device in the holster, thereby reducing user confusion and increasing user confidence in operation of the device.

The predefined buffering time is chosen to be sufficiently long as to effectively de-bounce or buffer accidental keystrokes. As indicated above, the predefined time period is chosen to approximate the time required by an average user to holster the device 50, from the point in time where the bottom of the device 50 touches the top of the holster 1 (i.e. the beginning of any opportunity for accidental keystrokes) to when the device is firmly secured within the holster so as to activate proximity switch 52. However, the time period may be increased or decreased depending on user agility.

A person skilled in the art, having read this description of the preferred embodiment, may conceive of variations and alternative embodiments. For example, as discussed above, although the preferred embodiment refers to implementation within a mobile communication device (such as a PDA, cellular phone or smart phone), it is contemplated that the method set forth herein may also be employed to advantage within other electronic devices having input means, such as desktop or laptop computers, GPS receivers, pagers or other communication devices.

All such variations and alternative embodiments are believed to be within the ambit of the claims appended hereto.

## Claims

1. A method of processing a command in the event of accidental actuation of an input device (38, 42, 46, 51) while entering a locked operating mode of an electronic device (50) that executes a command in response to actuation of said input device (38, 42, 46, 51), the method comprising:
detecting an input signal resulting from actuation of said input device (38, 42, 46, 51) and in response initiating execution of said command;
buffering said command for a predefined period of time; and
detecting an action within said predefined period of time, for causing said electronic device (50) to enter said locked operating mode, and in response discarding said command or deferring execution of said command upon reverting from said locked operating mode.

2. The method of claim 1, wherein buffering said command comprises placing said command in a queue for said predefined period of time and said method further comprises, upon detecting said action within said predefined period of time for causing said electronic device (50) to enter said locked operating mode, scanning a command history in said queue and retracting a command associated with the actuation of said input device (38, 42, 46, 51) or saving the command for later execution.

3. The method of claim 1 or claim 2, wherein deferring execution of said command comprises a user prompt to execute said command upon reverting from said locked operating mode.

4. The method of any one of the preceding claims, wherein said predefined period of time is in the range of 0.25 seconds to 0.50 seconds.

5. The method of any one of the preceding claims, wherein said input device is a keyboard (38) and said actuation is a keystroke.

6. The method of any one of claims 1 to 4, wherein said input device is a trackball (46) and said actuation is depression of said trackball.

7. The method of any one of the preceding claims, wherein said electronic device is a mobile communication device (50) and said action is inserting said mobile communication device into a holster (1) for cradling said mobile communication device.

8. The method of claim 7, further comprising detecting operation of a proximity switch (52) within said mobile communication device (50) responsive to detecting magnetic flux from a magnet (8) disposed within said holster (1) to thereby detect said action.

9. An electronic device (50), comprising:
at least one input device (38, 42, 46, 51) for generating an input signal upon actuation thereof;
at least one storage element (82, 94) for storing an application for executing a command in response to said actuation and for storing programming code; and
a processor (78) connected to said at least one storage element and said at least one input device for executing said programming code to cause said electronic device to perform the method of any one of claims 1 to 8.

10. The electronic device (50) of claim 9, further comprising a display (54) for displaying a user prompt to execute said command upon reverting from said locked operating mode.

11. A computer readable media (82, 94) for storing a set of programming code for an electronic device (50) for causing said electronic device to implement the method of any of claims 1 to 8.

## Patentansprüche

1. Verfahren zum Verarbeiten eines Befehls in dem Fall einer versehentlichen Betätigung einer Eingabevorrichtung (38, 42, 46, 51) beim Eingehen eines gesperrten Betriebsmodus einer elektronischen Vorrichtung (50), die einen Befehl in Reaktion auf eine Betätigung der Eingabevorrichtung (38, 42, 46, 51) ausführt, wobei das Verfahren aufweist:
Erfassen eines Eingangssignals, das aus einer Betätigung der Eingabevorrichtung (38, 42, 46, 51) resultiert, und in Reaktion darauf Initiieren einer Ausführung des Befehls;
Puffern des Befehls für eine vordefinierte Zeitdauer; und
Erfassen einer Aktion innerhalb der vordefinierten Zeitdauer, um die elektronische Vorrichtung (50) zu veranlassen, in den gesperrten Betriebsmodus zu gehen, und in Reaktion darauf Verwerfen des Befehls oder Aussetzen einer Ausführung des Befehls bei einem Zurückkehren aus dem gesperrten Betriebsmodus.

2. Verfahren gemäß Anspruch 1, wobei ein Puffern des Befehls aufweist ein Platzieren des Befehls in eine Warteschlange für die vordefinierte Zeitdauer und das Verfahren weiter aufweist, bei einem Erfassen der Aktion in der vordefinierten Zeitdauer zum Veranlassen der elektronischen Vorrichtung (50), in den gesperrten Betriebsmodus zu gehen, Abtasten einer Befehlshistorie in der Warteschlange und Zurückziehen eines Befehls, der zu der Betätigung der Eingabevorrichtung (38, 42, 46, 51) gehört, oder Speichern des Befehls für eine spätere Ausführung.

3. Verfahren gemäß Anspruch 1 oder Anspruch 2, wobei ein Aussetzen der Ausführung des Befehls eine Benutzeraufforderung aufweist, den Befehl auszuführen bei einem Zurückkehren aus dem gesperrten Betriebsmodus.

4. Verfahren gemäß einem der vorhergehenden Ansprüche, wobei die vordefinierte Zeitdauer in dem Bereich von 0,25 Sekunden bis 0,50 Sekunden liegt.

5. Verfahren gemäß einem der vorhergehenden Ansprüche, wobei die Eingabevorrichtung eine Tastatur (38) ist und die Betätigung ein Tastenanschlag ist.

6. Verfahren gemäß einem der Ansprüche 1 bis 4, wobei die Eingabevorrichtung ein Trackball (46) ist und die Betätigung ein Drücken des Trackballs ist.

7. Verfahren gemäß einem der vorhergehenden Ansprüche, wobei die elektronische Vorrichtung eine mobile Kommunikationsvorrichtung (50) ist und die Aktion ein Einführen der mobilen Kommunikationsvorrichtung in ein Holster (1) zur Aufnahme der der mobilen Kommunikationsvorrichtung ist.

8. Verfahren gemäß Anspruch 7, das weiter aufweist einen Betrieb eines Näherungsschalters (52) in der mobilen Kommunikationsvorrichtung (50) in Reaktion auf ein Erfassen eines magnetischen Flusses von einem Magnet (8), der in dem Holster (1) angeordnet ist, um **dadurch** die Aktion zu erfassen.

9. Elektronische Vorrichtung (50), die aufweist:
zumindest eine Eingabevorrichtung (38, 42, 46, 51) zum Erzeugen eines Eingangssignals bei deren Betätigung;
zumindest ein Speicherelement (82, 94) zum Speichern einer Anwendung zur Ausführung eines Befehls in Reaktion auf die Betätigung und zum Speichern eines Programmierungscodes; und
einen Prozessor (78), der mit dem zumindest einen Speicherelement und
der zumindest einen Eingabevorrichtung verbunden ist, zur Ausführung des Programmierungscodes, um die elektronische Vorrichtung zu veranlassen,
das Verfahren gemäß einem der Ansprüche 1 bis 8 durchzuführen.

10. Elektronische Vorrichtung (50) gemäß Anspruch 9, die weiter aufweist eine Anzeige (54) zum Anzeigen einer Benutzeraufforderung, den Befehl auszuführen bei einem Zurückkehren aus dem gesperrten Betriebsmodus.

11. Computerlesbares Medium (82, 94) zum Speichern eines Satzes von Programmierungscodes für eine elektronische Vorrichtung (50), um die elektronische Vorrichtung zu veranlassen, das Verfahren gemäß einem der Ansprüche 1 bis 8 zu implementieren.

## Revendications

1. Procédé de traitement d'une instruction dans l'éventualité de la manoeuvre accidentelle d'un dispositif (38, 42, 46, 51) d'entrée pendant l'entrée en mode de fonctionnement verrouillé d'un dispositif électronique (50) qui exécute une instruction en réponse à la manoeuvre dudit dispositif (38, 42, 46, 51) d'entrée, le procédé comprenant :
la détection d'un signal d'entrée résultant de la manoeuvre dudit dispositif (38, 42, 46, 51) d'entrée et en réponse, le lancement de l'exécution de ladite instruction ;
la mise en mémoire tampon de ladite instruction pendant une période de temps prédéfinie ; et
la détection d'une action au cours de ladite période de temps prédéfinie, pour faire que ledit dispositif électronique (50) entre dans ledit mode de fonctionnement verrouillé, et en réponse, l'élimination de ladite instruction ou le retardement de l'exécution de ladite instruction jusqu'à la sortie dudit mode de fonctionnement verrouillé.

2. Procédé selon la revendication 1, dans lequel la mise en mémoire tampon de ladite instruction comprend le placement de ladite instruction dans une file d'attente pendant ladite période de temps prédéfinie et dans lequel ledit procédé comprend en outre, lors de la détection de ladite action au cours de ladite période de temps prédéfinie pour faire que ledit dispositif électronique (50) entre dans ledit mode de fonctionnement verrouillé, l'examen d'un historique d'instructions dans ladite file d'attente et le retrait d'une instruction associée à la manoeuvre dudit dispositif (38, 42, 46, 51) d'entrée ou la sauvegarde de l'instruction pour exécution ultérieure.

3. Procédé selon la revendication 1 ou la revendication 2, dans lequel le retardement de l'exécution de ladite instruction comprend une invite de l'utilisateur à exécuter ladite instruction au moment de la sortie dudit mode de fonctionnement verrouillé.

4. Procédé selon l'une quelconque des revendications précédentes, dans lequel ladite période de temps prédéfinie est dans la fourchette de 0,25 seconde à 0,50 seconde.

5. Procédé selon l'une quelconque des revendications précédentes, dans lequel ledit dispositif d'entrée est un clavier (38) et ladite manoeuvre est la frappe d'une touche.

6. Procédé selon l'une quelconque des revendications 1 à 4, dans lequel ledit dispositif d'entrée est une boule roulante (46) et ladite manoeuvre est une pression sur ladite boule roulante.

7. Procédé selon l'une quelconque des revendications précédentes, dans lequel ledit dispositif électronique est un dispositif mobile (50) de communication et ladite action est l'introduction dudit dispositif mobile de communication dans un étui (1) destiné à recevoir ledit dispositif mobile de communication.

8. Procédé selon la revendication 7, comprenant en outre une opération de détection d'un interrupteur (52) de proximité à l'intérieur dudit dispositif mobile (50) de communication en réponse à la détection du flux magnétique d'un aimant (8) disposé dans ledit étui (1) pour détecter ainsi ladite action.

9. Dispositif électronique (50), comprenant :
au moins un dispositif (38, 42, 46, 51) d'entrée destiné à engendrer un signal d'entrée lors de sa manoeuvre ;
au moins un élément (82, 94) de mémorisation destiné à mémoriser une application pour exécuter une instruction en réponse à ladite manoeuvre et à mémoriser du code de programmation ; et
un processeur (78) connecté audit au moins un élément de mémorisation et audit au moins un dispositif d'entrée destiné à exécuter ledit code de programmation pour faire que ledit dispositif électronique mette en oeuvre le procédé selon l'une quelconque des revendications 1 à 8.

10. Dispositif électronique (50) selon la revendication 9, comprenant en outre un écran (54) destiné à afficher une invite de l'utilisateur à exécuter ladite instruction lors de la sortie dudit mode de fonctionnement verrouillé.

11. Supports (82, 94) lisibles par ordinateur destinés à mémoriser un ensemble de codes de programmation pour un dispositif électronique (50) pour faire que ledit dispositif électronique mette en oeuvre le procédé selon l'une quelconque des revendications 1 à 8.
